# EUROPÄISCHE PATENTSCHRIFT

(11) **EP 2 003 873 B1**
(45) Veröffentlichungstag und Bekanntmachung des Hinweises auf die Patenterteilung: **06.06.2018**
(21) Anmeldenummer: 08010620.6
(22) Anmeldetag: 11.06.2008
(51) Int. Cl.: H04N 5/365, H04N 5/335

(54) **Bildsensor und Ausleseverfahren**
Picture sensor and readout method
Capteur d'images et procédé de lecture

(30) Priorität: 14.06.2007 DE 102007027463
(43) Veröffentlichungstag der Anmeldung: 17.12.2008
(73) Patentinhaber: Arnold & Richter Cine Technik GmbH & Co. Betriebs KG, 80799 München (DE)
(72) Erfinder: Cieslinski, Michael, 82008 Unterhaching (DE)
(74) Vertreter: Manitz Finsterwald Patentanwälte PartmbB

(56) Entgegenhaltungen:
- EP-A2- 1 152 471
- US-A1- 2001 013 571
- US-A1- 2006 013 485
- US-A1- 2006 231 732
- US-A1- 2006 268 137
- US-B1- 6 377 304
- US-B1- 6 590 198

## Beschreibung

Die vorliegende Erfindung betrifft einen Bildsensor, insbesondere CMOS-Bildsensor, für elektronische Kameras, mit einer Vielzahl von in Zeilen und Spalten angeordneten lichtempfindlichen Pixeln, ferner mit einer Anzahl von Ausgangsverstärkern, ferner mit einer Schalteinrichtung, um wahlweise die Pixel einer der Zeilen auf die Ausgangsverstärker zu schalten, und mit einer Steuereinrichtung zum Steuern der Schalteinrichtung.

Bekannte elektronische Kameras enthalten einen Bildsensor, der eine Vielzahl von in Zeilen und Spalten angeordneten lichtempfindlichen Elementen bzw. Pixel umfasst, welche durch ein Objektiv der Kamera fallendes Licht in elektrische Signale umwandeln. Zum Auslesen eines Bildes wird jedes der Pixel adressiert, und ein Signal, das zu einer durch eine Belichtung gesammelten Ladung des Pixels proportional ist, wird zu einem Ausgang des Bildsensors geleitet.

In Kameras, die gleichzeitig eine hohe Anzahl von lichtempfindlichen Elementen und eine hohe Bildrate besitzen, werden Bildsensoren verwendet, die mehrere Ausgänge a aufweisen, welche in einem jeweiligen Auslesezyklus parallel - und somit schneller - ausgelesen werden können. Zusätzlich können die Spalten in Spaltengruppen eingeteilt sein, welche jeweils mehrere Spalten aufweisen, wobei die Anzahl der Spalten in einer jeden der Spaltengruppen der Anzahl der Ausgänge entspricht.

Dabei sind die Spalten den Ausgängen des Bildsensors nach Art nebeneinander liegender Einheitsmatrizen zugeordnet, so dass die Spalten mit den Nummern n, n+a, n+2a, usw. jeweils dem Ausgang mit der Nummer n zugeordnet sind, wobei die Spalten und die Ausgänge jeweils fortlaufend nummeriert sind.

So ist beispielsweise bei einem Bildsensor mit 32 Ausgängen und mit einer Unterteilung der Spalten in Spaltengruppen in einem ersten Auslesezyklus die 1. Spalte des Bildsensors, welche der 1. Spalte der 1. Spaltengruppe entspricht, dem 1. Ausgang zugeordnet. Die 2. Spalte des Bildsensors, welche der 2. Spalte der 1. Spaltengruppe entspricht, ist dem 2. Ausgang zugeordnet, usw. bis zu der 32. Spalte des Bildsensors, welche der 32. Spalte der 1. Spaltengruppe entspricht, die dem 32. Ausgang zugeordnet ist. In dem nachfolgenden Auslesezyklus ist die 33. Spalte des Bildsensors, welche der 1. Spalte der 2. Spaltengruppe entspricht, wieder dem 1. Ausgang zugeordnet, die 34. Spalte des Bildsensors, welche der 2. Spalte der 2. Spaltengruppe entspricht, wieder dem 2. Ausgang zugeordnet usw..

Jeder der Ausgänge des Bildsensors weist einen eigenen Ausgangsverstärker auf, wobei durch die Ausgangsverstärker die Signale der Pixel verstärkt werden, um anschließend digitalisiert zu werden. Die Signale liegen als analoge elektrische Spannungen, die den gesammelten Ladungen entsprechen, an den Ausgangsverstärkern an.

Das Auslesen eines derartigen Bildsensors erfolgt üblicherweise zeilenweise, d.h. Zeile für Zeile. Innerhalb der jeweils ausgewählten Zeile werden die Signale der zugeordneten Pixel über entsprechende Steuersignale spaltenweise, d.h. Spalte für Spalte, oder ggf. spaltengruppenweise, d.h. Spaltengruppe für Spaltengruppe, auf die Ausgänge des Bildsensors geschaltet, wobei das Auslesen bei einer 1., an einem Rand des Bildsensors befindlichen Spalte bzw. Spaltengruppe beginnt und in aufsteigender Reihenfolge mit der jeweils unmittelbar benachbarten Spalte bzw. Spaltengruppe, d.h. gemäß der Anordnungsreihenfolge der Spalten bzw. Spaltengruppen, fortgesetzt wird. Hieraus folgt, dass an dem 1. Ausgang bzw. 1. Ausgangsverstärker nacheinander die Signale der Pixel der 1., 33., 65., usw. Spalte des Bildsensors ausgegeben werden, an dem 2. Ausgang bzw. 2. Ausgangsverstärker die Signale der Pixel der 2., 34., 66., usw. Spalte des Bildsensors ausgegeben werden usw..

Somit ist bei bekannten Bildsensoren eine streng regelmäßige Reihenfolge vorgesehen, in der die Signale der Pixel auf die Ausgangsverstärker geschaltet werden.

Es ist bekannt, dass das jeweils aktuell an einem Ausgangsverstärker anliegende Signal immer einen kleinen, beispielsweise im Promillebereich liegenden Anteil des durch den jeweiligen Ausgangsverstärker unmittelbar zuvor verstärkten Signals enthält, welcher Anteil beispielsweise durch thermische Effekte und/oder Rückwirkungen auf die Spannungsversorgung verursacht wird. Es sind geeignete Schaltungen und Rechenmethoden bekannt, um dem störenden Einfluss des Signals des Vorgängerpixels entgegenzuwirken. Jedoch ist eine vollständige Kompensation nicht möglich.

Besitzt der Bildsensor lediglich einen einzigen Ausgang und damit nur einen Ausgangsverstärker, werden die Signale aller Pixel durch denselben Ausgangsverstärker verstärkt, wobei die Signale unmittelbar nebeneinander angeordnete Pixel unmittelbar nacheinander verstärkt werden, so dass der Anteil des Signals des jeweiligen Vorgängerpixels in dem Signal des dem jeweiligen Vorgängerpixel unmittelbar benachbart angeordneten Pixels wirksam wird. Dies erzeugt bei großen Unterschieden zwischen zwei unmittelbar nacheinander verstärkten Signalen zwar eine Art Unschärfe im Bild. Diese ist mit dem Auge jedoch nicht wahrnehmbar.

Besitzt der Bildsensor jedoch mehrere Ausgänge, wie vorstehend beispielhaft erläutert ist, macht sich der Anteil des Signals des jeweiligen Vorgängerpixels - also der Anteil des unmittelbar zuvor verstärkten Signals - bei der Verstärkung des Signals desjenigen Pixels bemerkbar, das um die Anzahl der Ausgänge von dem Vorgängerpixel entfernt angeordnet ist. Die Signale der Pixel, die zwischen dem Vorgängerpixel und dem um die Anzahl der Ausgänge von dem Vorgängerpixel entfernten Pixel angeordnet sind, werden nämlich von den Ausgangsverstärkern der übrigen Ausgänge verstärkt. Beispielsweise wird in einem Bild, welches eine helle Kerzenflamme in einem ansonsten dunklen Raum zeigt, ein visuelles Echo der Kerzenflamme erzeugt, welches seitlich zu der Original-Kerzenflamme versetzt ist. Eine derartige Bildstörung wird als Geisterbild bezeichnet. In dem gewählten Beispiel ist das Geisterbild besonders gut sichtbar, da das Echo in einem dunklen Bereich auftritt. Beispielsweise ist bei einem Bildsensor mit 32 Ausgängen das Echo um 32 Pixel von dem Original versetzt.

Das Dokument US 2006/0268137 A1 beschreibt einen Bildsensor, bei dem die Pixel einer Spalte nicht immer auf denselben Ausleseschaltkreis geschaltet werden, sondern von Zeile zu Zeile variierend auf verschiedene Ausleseschaltkreise, um Vertikalstreifen zu verhindern.

Das Dokument EP 1 152 471 A2 offenbart einen Farbsensor, bei dem die Pixel nach einem CMYK-Farbmodell unterteilt sind, wobei zu jeder Spalte des Farbsensors vier Spaltenleitungen vorgesehen sind, die auf entsprechende Y-, C-, M- und G-Kanäle geschaltet sind. Dabei variiert die Zuordnung jeweils untereinander angeordneter Pixel Y, C, G, M zu den Kanälen.

Der Erfindung liegt die Aufgabe zugrunde, einen Bildsensor der eingangs genannten Art anzugeben, welcher ermöglicht, die Entstehung von Geisterbildern zu unterdrücken.

Diese Aufgabe wird durch einen Bildsensor mit den Merkmalen des Anspruchs 1 gelöst, und insbesondere dadurch, dass die Reihenfolge, in der die Pixel auf die Ausgangsverstärker geschaltet werden, gegenüber der Reihenfolge variiert wird, in der die Pixel entlang einer Zeile des Bildsensors angeordnet sind.

Bei dem erfindungsgemäßen Bildsensor werden die Signale der Pixel einer Zeile spaltengruppenweise ausgelesen, d.h. die Signale der Pixel einer Spaltengruppe der betreffenden Zeile können in einem jeweiligen Auslesezyklus gemeinsam ausgelesen werden.

Durch entsprechende Steuerung der Schalteinrichtung werden die Signale der Pixel gemäß einer solchen räumlichen oder zeitlichen Reihenfolge innerhalb einer jeweiligen Spaltengruppe (d.h. innerhalb eines Auslesezyklus) oder von Spaltengruppe zu Spaltengruppe (d.h. von Auslesezyklus zu Auslesezyklus) auf die einzelnen Ausgangsverstärker geschaltet, die bezüglich der Reihenfolge verschieden ist, in der die Pixel entlang der betreffenden Zeile des Bildsensors angeordnet sind.

Hierdurch wird letztlich erreicht, dass der räumliche Abstand der Pixel, deren Signale nacheinander auf einen bestimmten der mehreren Ausgangsverstärker geschaltet werden, variiert wird. Diese Änderung der Schaltreihenfolge bzw. des Pixelabstands erfolgt zumindest für mehrere Ausgangsverstärker, vorzugsweise für alle Ausgangsverstärker. Hierdurch werden die eingangs erläuterten Geisterbilder in sich verwürfelt, so dass sie mit dem Auge nicht mehr wahrnehmbar sind.

Gemäß einer ersten Variante der Erfindung sind die Spalten in mehrere Spaltengruppen unterteilt und die Anzahl der Ausgangsverstärker entspricht der Anzahl der Spalten einer Spaltengruppe, wobei die Spalten einer jeden Spaltengruppe gemäß einer Zuordnungsreihenfolge den Ausgangsverstärkern zugeordnet sind, und wobei für die mehreren Spaltengruppen mehrere voneinander verschiedene Zuordnungsreihenfolgen vorgesehen sind. Mit anderen Worten sind die Reihenfolgen, in der die Spalten (und somit die Pixel) einer jeweiligen Spaltengruppe den Ausgangsverstärkern des Bildsensors zugeordnet sind, für die mehreren Spaltengruppen unterschiedlich. Die Zuordnung der einzelnen Spalten einer jeweiligen Spaltengruppe zu den Ausgangsverstärkern des Bildsensors erfolgt somit nicht oder nicht ausschließlich nach der vorstehend erläuterten Art einer Einheitsmatrix.

Eine jeweilige Zuordnungsreihenfolge ist beispielsweise durch die Verteilung von Zuordnungspunkten vorgegeben, an denen eine Spalte des Bildsensors mit einer jeweiligen horizontalen Ausgangsleitung eines Signalbusses verknüpft oder verknüpfbar ist, die wiederum auf einen bestimmten der mehreren Ausgangsverstärker des Bildsensors schaltbar ist. Diese Zuordnungspunkte sind entweder fest vorgegeben (durch dauerhafte elektrische Verbindung zwischen der betreffenden Spaltenleitung und der betreffenden Ausgangsleitung). Oder es sind auswählbar veränderliche Zuordnungspunkte vorgesehen, wobei an den betreffenden Zuordnungspunkten ein jeweiliger Schalter angeordnet ist.

Bevorzugt weisen wenigstens einige der Spaltengruppen voneinander verschiedene Zuordnungsreihenfolgen auf. Die Zuordnungsreihenfolge der Spalten einer Spaltengruppe zu den Ausgangsverstärkern ist also von der Zuordnungsreihenfolge der Spalten einer anderen Spaltengruppe zu den Ausgangsverstärkern verschieden. Insbesondere können die Zuordnungsreihenfolgen aller Spaltengruppen voneinander verschieden sein.

Insbesondere ist es möglich, dass für jeweils benachbarte Spaltengruppen verschiedene Zuordnungsreihenfolgen vorgesehen sind. Beispielsweise können die ungeradzahligen Spaltengruppen des Bildsensors eine erste Zuordnungsreihenfolge und die geradzahligen Spaltengruppen eine zweite Zuordnungsreihenfolge aufweisen, wobei die erste und die zweite Zuordnungsreihenfolge voneinander verschieden sind. Hierdurch kann in Fällen, in denen die Anordnungsreihenfolge der Spaltengruppen der Auslesereihenfolge der Spaltengruppen entspricht, eine ausreichende Verwürfelung von Geisterbildern erreicht werden.

Nach einer Ausgestaltung der Erfindung sind mehrere Signalbusse vorgesehen, welche jeweils eine Anzahl von Ausgangsleitungen umfassen, die der Anzahl der Ausgangsverstärker entspricht, wobei die Signalbusse insbesondere mittels einer als Multiplexereinrichtung ausgebildeten Schalteinrichtung wahlweise auf die Ausgangsverstärker schaltbar sind. Hierdurch können bei kleinen Signalbandbreiten hohe Einschwingzeiten in Kauf genommen werden, um dennoch hohe Ausleseraten zu erzielen. Die Ausgangsleitungen der Signalbusse sind dafür vorgesehen, die Ausgangsverstärker mit den Spalten der Spaltengruppen zu verbinden. Beispielsweise kann die Steuereinrichtung dazu ausgebildet sein, die Schalteinrichtung dergestalt zu steuern, dass zwei nacheinander auf die Ausgangsverstärker geschaltete Spaltengruppen über verschiedene der Signalbusse auf die Ausgangsverstärker geschaltet werden.

Insbesondere sind einige oder alle der Spaltengruppen mehreren oder allen der Signalbusse zugeordnet, wobei die Zuordnungsreihenfolgen innerhalb einer jeden solchen Spaltengruppe für die betreffenden Signalbusse verschieden sind. Insbesondere hierdurch wird ermöglicht, dass die Zuordnungsreihenfolge innerhalb einer Spaltengruppe von Zeile zu Zeile variiert wird. Hierfür können die Spalten der betreffenden Spaltengruppe von Zeile zu Zeile auf unterschiedliche Signalbusse geschaltet werden. Hierdurch kann eine weitere Verwürfelung erreicht werden.

Eine weitere Verwürfelung kann erreicht werden, wenn die Steuereinrichtung dazu ausgebildet ist, die Schalteinrichtung dergestalt zu steuern, dass die Signalbusse von Zeile zu Zeile in unterschiedlicher Reihenfolge auf die Ausgangsverstärker geschaltet werden.

Nach einer Weiterbildung ist der Bildsensor unter Verwendung einer Auslesesequenz vollständig auslesbar, wobei der Bildsensor allerdings mehr Signalbusse aufweist, als für das Auslesen gemäß einer regulären Auslesesequenz tatsächlich benötigt werden. Es ist folglich ein hinsichtlich eines vollständigen Auslesens redundanter Signalbus vorgesehen. Wenn der Bildsensor beispielsweise 5 Signalbusse aufweist, für das Auslesen jedoch nur 4 Signalbusse benötigt werden, so kann, falls einer der Signalbusse defekt ist, eine Buszuordnungsreihenfolge verwendet werden, bei der der defekte Signalbus nicht verwendet wird.

Gemäß einer zweiten Variante der Erfindung, und zwar alternativ oder zusätzlich zu den verschiedenen räumlichen Zuordnungsreihenfolgen, wird der Bildsensor dergestalt gesteuert, dass die zeitliche Auslesereihenfolge, gemäß der die Spaltengruppen nacheinander mit den Ausgangsverstärkern verbunden werden, von der Anordnungsreihenfolge verschieden ist, gemäß der die Spaltengruppen in Richtung einer Zeile nebeneinander angeordnet sind, wobei die Spalten in mehrere Spaltengruppen unterteilt sind und die Anzahl der Ausgangsverstärker der Anzahl der Spalten einer Spaltengruppe entspricht. Mit anderen Worten werden die verschiedenen Spaltengruppen nicht in derselben Reihenfolge auf die Ausgangsverstärker geschaltet, in der die Spaltengruppen nebeneinander angeordnet sind.

Auch hierdurch wird beispielsweise ein Geisterbild, dessen Original sich über mehrere Spaltengruppen hinweg erstreckt, entlang der Grenzen der Spaltengruppen geteilt, wobei die einzelnen Teilstücke des Geisterbilds verwürfelt an verschiedenen Positionen innerhalb des Bilds erscheinen können, so dass das Geisterbild mit dem Auge nicht mehr wahrnehmbar ist. Besonders wirkungsvoll ist es, wenn das Variieren der zeitlichen Reihenfolge des Auslesens der Spaltengruppen mit dem erläuterten Variieren der räumlichen Zuordnungsreihenfolge der Spalten zu den Ausgangsverstärkern kombiniert wird.

Diese Verwürfelung kann in den beiden vorgenannten Fällen weiterhin dadurch verbessert werden, dass die Auslesereihenfolge auch von Zeile zu Zeile variiert wird.

Gemäß einer weiteren Ausführungsform weist der Bildsensor wenigstens einen Signalbus auf, welcher jeweils eine Anzahl von Ausgangsleitungen umfasst, die der Anzahl der Ausgangsverstärker entspricht, wobei die Spalten an vorbestimmten Zuordnungspunkten mit mehren oder allen der Ausgangsleitungen des wenigstens einen Signalbusses verbindbar sind. Dies ermöglicht eine beliebige Zuordnung der Spalten zu den Ausgangsverstärkern. Hierdurch kann auch ein defekter Ausgang umgangen werden.

Ein nicht beschränkendes Ausführungsbeispiel der Erfindung, das eine Kombination mehrerer Maßnahmen zum Verwürfeln eines Geisterbildes illustriert, ist in der Zeichnung dargestellt und wird nachfolgend beschrieben.

Es zeigen, jeweils in schematischer Darstellung,
- Fig. 1: eine erste Ausbildung eines erfindungsgemäßen Bildsensors,
- Fig. 2: eine zweite Ausbildung eines erfindungsgemäßen Bildsensors,
- Fig. 3: einen Teil einer dritten Ausbildung eines erfindungsgemäßen Bildsensors, und
- Fig. 4: einen Teil eines nicht-erfindungsgemäßen Bildsensors.

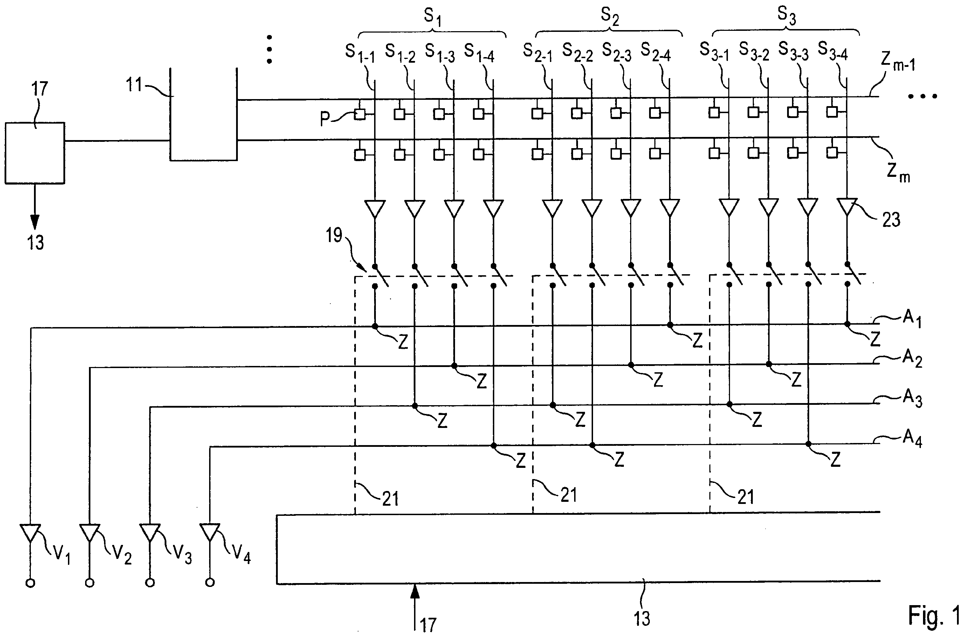

Der in Fig. 1 dargestellte Bildsensor weist eine Vielzahl von lichtempfindlichen Pixeln P auf, die in Zeilen (hier horizontal dargestellt) und Spalten (hier vertikal dargestellt) angeordnet sind. Der Übersichtlichkeit halber ist lediglich eines der Pixel P mit einem Bezugszeichen versehen. Jede Zeile besitzt eine Zeilenauswahlleitung ..., Zₘ₋₁, Zₘ für die der jeweiligen Zeile zugeordneten Pixel P, und jede Spalte umfasst eine Spaltenleitung S₁₋₁, ..., S₁₋₄, S₂₋₁, ..., S₂₋₄, ... für die der jeweiligen Spalte zugeordneten Pixel P. Die Spaltenleitungen S₁₋₁, ..., S₁₋₄, S₂₋₁, ..., S₂₋₄, ... sind in Spaltengruppen S₁, S₂, ... unterteilt, welche jeweils vier Spaltenleitungen S₁₋₁, ..., S₁₋₄, S₂₋₁, ..., S₂₋₄, ... umfassen.

Der Bildsensor umfasst ferner eine Zeilenauswahlschaltung 11, durch die jeweils eine der Zeilen ..., Zₘ₋₁, Zₘ zum Auslesen der Signale der Pixel P dieser Zeile ..., Zₘ₋₁, Zₘ ausgewählt werden kann. Darüber hinaus ist eine Spaltenauswahlschaltung 13 vorgesehen, durch die jeweils eine der mehreren Spaltengruppen S₁, S₂, ... zum Auslesen der Signale der Pixel P dieser Spaltengruppe S₁, S₂, ... ausgewählt werden kann. Hierzu ist für jede der Spaltenleitungen S₁₋₁, ..., S₁₋₄, S₂₋₁, ..., S₂₋₄, ... ein eigener Spaltenauswahlschalter 19 vorgesehen (von denen lediglich einer mit einem Bezugszeichen versehen ist), wobei die Spaltenauswahlschalter 19 einer jeden Spaltengruppe S₁, S₂, ... über eine gemeinsame Spaltenauswahlsteuerleitung 21 von der Spaltenauswahlschaltung 13 steuerbar sind, so dass die Spaltenauswahlschalter 19 einer jeden Spaltengruppe S₁, S₂, ... jeweils gemeinsam schaltbar sind. Jedem der Spaltenauswahlschalter 19 ist ein eigener Spaltenverstärker 23 vorgeschaltet. Die Zeilenauswahlschaltung 11, die Spaltenauswahlschaltung 13, die Spaltenauswahlschalter 19, die Spaltenauswahlsteuerleitungen 21, sowie gegebenenfalls eine Busauswahlschaltung, Busauswahlschalter, und eine Busauswahlsteuerleitung, welche nachstehend noch näher erläutert werden, sind Teil einer Schalteinrichtung des Bildsensors, welche durch eine Steuereinrichtung, beispielsweise einen Mikro-Controller 17, gesteuert wird.

Darüber hinaus weist der Bildsensor einen Signalbus auf, welcher in dem hier gezeigten Beispiel vier Ausgangsleitungen A₁, A₂, A₃, A₄ umfasst, auf die die Signale der Pixel einer Zeile ..., Zₘ₋₁, Zₘ einer Spaltengruppe S₁, S₂, ... geschaltet werden können, wobei jede der Ausgangsleitungen A₁, A₂, A₃, A₄ mit einem eigenen Ausgangsverstärker V₁, V₂, V₃, V₄ verbunden ist.

Dabei ist jede Spaltenleitung S₁₋₁, ..., S₁₋₄, S₂₋₁, ..., S₂₋₄, ... einer jeden Spaltengruppe S₁,S₂, ... einer jeweiligen Ausgangsleitung A₁, A₂, A₃, A₄ und damit einem jeweiligen Ausgangsverstärker V₁, V₂, V₃, V₄ gemäß einer Zuordnungsreihenfolge eineindeutig zugeordnet, wobei die Spaltengruppen S₁, S₂, ... voneinander verschiedene Zuordnungsreihenfolgen aufweisen. Bei den Zuordnungen handelt es sich hier um feste elektrische Verbindungen zwischen den Spaltenleitungen S₁₋₁, ..., S₁₋₄, S₂₋₁, ..., S₂₋₄, ... und den Ausgangsleitungen A₁, A₂, A₃, A₄.

Beispielsweise liegen bei dem in Fig. 1 dargestellten Bildsensor folgende Zuordnungsreihenfolgen vor: Die 1. Spaltenleitung S₁₋₁ der 1. Spaltengruppe S₁ ist der 1. Ausgangsleitung A₁, die 2. Spaltenleitung S₁₋₂ der 1. Spaltengruppe S₁ ist der 3. Ausgangsleitung A₃, die 3. Spaltenleitung S₁₋₃ der 1. Spaltengruppe S₁ ist der 2. Ausgangsleitung A₂, und die 4. Spaltenleitung S₁₋₄ der 1. Spaltengruppe S₁ ist der 4. Ausgangsleitung A₄ zugeordnet, wie anhand von Zuordnungspunkten Z erkennbar ist. Weiterhin ist die 1. Spaltenleitung S₂₋₁ der 2. Spaltengruppe S₂ der 3. Ausgangsleitung A₃, die 2. Spaltenleitung S₂₋₂ der 2. Spaltengruppe S₂ der 4. Ausgangsleitung A₄, die 3. Spaltenleitung S₂₋₃ der 2. Spaltengruppe S₂ der 2. Ausgangsleitung A₂, und die 4. Spaltenleitung S₂₋₄ der 2. Spaltengruppe S₂ der 1. Ausgangsleitung A₁ zugeordnet. Ferner ist die 1. Spaltenleitung S₃₋₁ der 3. Spaltengruppe S₃ der 3. Ausgangsleitung A₃, die 2. Spaltenleitung S₃₋₂ der 3. Spaltengruppe S₃ der 2. Ausgangsleitung A₂, die 3. Spaltenleitung S₃₋₃ der 3. Spaltengruppe S₃ der 4. Ausgangsleitung A₄, und die 4. Spaltenleitung S₃₋₄ der 3. Spaltengruppe S₃ der 1. Ausgangsleitung A₁ zugeordnet.

Nachfolgend wird das Auslesen des in Fig. 1 dargestellten erfindungsgemäßen Bildsensors beschrieben.

Das Auslesen erfolgt zeilenweise durch Anlegen entsprechender Adresssignale an die Zeilenauswahlschaltung 11, wobei die Zeilenauswahlleitungen ..., Zₘ₋₁, Zₘ nacheinander beginnend bei einer ersten, an einem Rand des Bildsensors befindlichen Zeilenauswahlleitung in aufsteigender Reihenfolge adressiert werden. Pro Zeile erfolgt das Auslesen spaltengruppenweise, d.h. die der jeweils ausgewählten Zeile zugeordneten Pixel P werden durch entsprechende Steuerung der Spaltenauswahlschalter 19 durch die Spaltenauswahlschaltung 13 Spaltengruppe für Spaltengruppe ausgelesen. Da die Zuordnungsreihenfolgen der Spaltengruppen S₁, S₂, ... zu dem Signalbus voneinander verschieden sind, kann eine Verwürfelung eines Geisterbildes erreicht werden.

Um die Verwürfelung noch weiter zu erhöhen, kann die Steuereinrichtung 17 des Bildsensors dazu ausgebildet sein, die Spaltenauswahlschalter 19 durch die Spaltenauswahlschaltung 13 derart zu steuern, dass die Auslesereihenfolge der Spaltengruppen S₁, S₂, ... von Zeile zu Zeile variiert wird. Hierzu ist der Bildsensor derart eingerichtet, dass die Auslesereihenfolge der Spaltengruppen für wenigstens einige der Zeilen ..., Zₘ₋₁, Zₘ nicht mit der Anordnungsreihenfolge der Spaltengruppen S₁, S₂, ... übereinstimmt. Die Spaltengruppen S₁, S₂, ... werden also nicht in aufsteigender Reihenfolge ausgelesen, also nicht zuerst die 1. Spaltengruppe S₁, danach die 2. Spaltengruppe S₂, danach die 3. Spaltengruppe S₃, usw.. Vielmehr werden die Spaltengruppen S₁, S₂, ... quasi-zufällig ausgelesen, d.h. beispielsweise zunächst die 37. Spaltengruppe S₃₇, danach die 7. Spaltengruppe S₇, danach die 22. Spaltengruppe, usw..

Bei einer Variante der Ausführungsform gemäß Fig. 1 ist für die verschiedenen Spaltengruppen S₁, S₂, ... abweichend von der Darstellung gemäß Fig. 1 stets dieselbe Zuordnungsreihenfolge vorgesehen, beispielsweise nach der bekannten Art einer Einheitsmatrix. Eine Verwürfelung eines Geisterbildes wird in diesem Fall ausschließlich dadurch erreicht, dass die Auslesereihenfolge der Spaltengruppen S₁, S₂, ... für wenigstens einige der Zeilen variiert wird, wie in dem vorstehenden Absatz beschrieben.

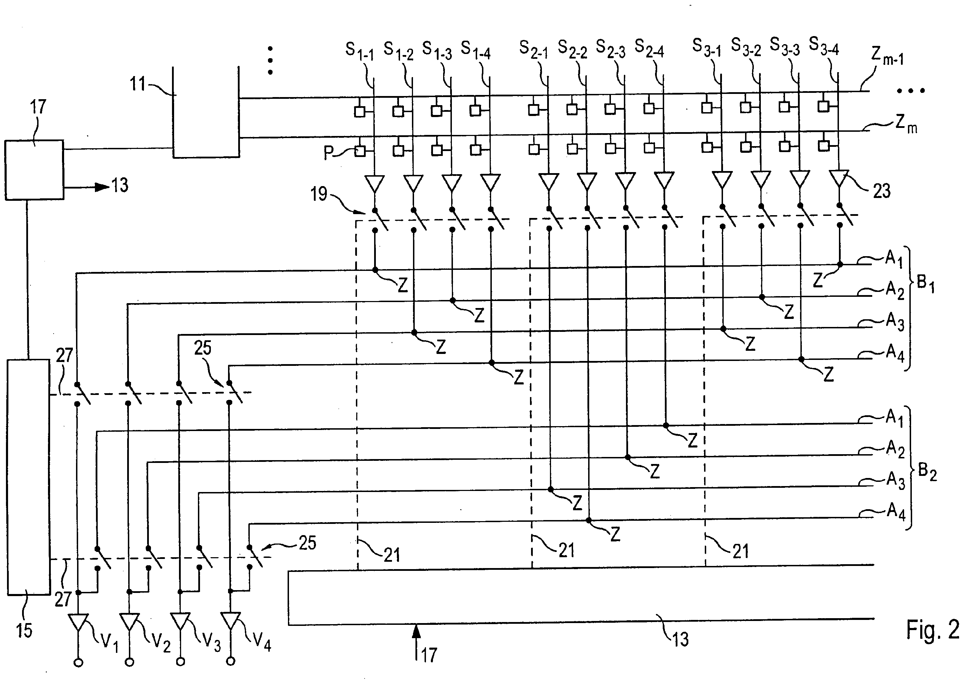

Bei dem in Fig. 2 dargestellten Bildsensor sind, im Gegensatz zu dem in Fig. 1 gezeigten Bildsensor, welcher lediglich einen Signalbus aufweist, zwei Signalbusse B₁, B₂ vorgesehen, welche jeweils vier Ausgangsleitungen A₁, A₂, A₃, A₄ aufweisen, wobei die ungeradzahligen Spaltengruppen S₁, S₃, ... dem ersten Signalbus B₁ und die geradzahligen Spaltengruppen S2, S₄, ... dem zweiten Signalbus B₂ zugeordnet sind. Grundsätzlich ist jedoch auch jede andere Zuordnung der Spaltengruppen S₁, S₂, S₃, ... zu den Signalbussen B₁, B₂ möglich. Die Zuordnungsreihenfolgen der einzelnen Spaltengruppen S₁, S₂, S₃, ... entsprechen im Übrigen den in Fig. 1 gezeigten Zuordnungsreihenfolgen, so dass auch die in Fig. 2 gezeigten Spaltengruppen S₁, S₂, ... voneinander verschiedene Zuordnungsreihenfolgen aufweisen.

Darüber hinaus ist eine von dem Mikro-Controller 17 steuerbare Busauswahlschaltung 15 vorgesehen, welche es ermöglicht, über zwei Busauswahlsteuerleitungen 27 wahlweise einen der beiden Signalbusse B₁, B₂ auf die Ausgangsverstärker V₁, V₂, V₃ V₄ zu schalten, wobei die 1. Ausgangsleitung A₁ des jeweiligen Signalbusses B₁, B₂ auf den 1. Ausgangsverstärker V₁, die 2. Ausgangsleitung A₂ des jeweiligen Signalbusses B₁, B₂ auf den 2. Ausgangsverstärker, die 3. Ausgangsleitung A₃ des jeweiligen Signalbusses B₁, B₂ auf den 3. Ausgangsverstärker, und die 4. Ausgangsleitung A₄ des jeweiligen Signalbusses B₁, B₂ auf den 4. Ausgangsverstärker schaltbar ist. Hierzu ist für jede der Ausgangsleitungen A₁, A₂, A₃, A₄ ein eigener Busauswahlschalter 25 vorgesehen (von denen lediglich zwei mit einem Bezugszeichen versehen sind), wobei die Busauswahlschalter 25 eines jeden Signalbusses B₁, B₂ über eine jeweilige gemeinsame Busauswahlsteuerleitung 27 von der Busauswahlschaltung 15 steuerbar sind, so dass die Busauswahlschalter 25 eines jeden Busses B₁, B₂ jeweils gemeinsam schaltbar sind.

Durch das Vorsehen mehrerer Busse B₁, B₂ kann eine Erhöhung der Auslesegeschwindigkeit erreicht werden. Während die Signale der Pixel P einer ausgewählten Spaltengruppe S₁, S₂, ... einer ausgewählten Zeile ..., Zₘ₋₁, Zₘ über den einen Signalbus B₁ oder B₂ auf die Ausgangsverstärker A₁, A₂, A₃, A₄ geschaltet sind, können nämlich bereits die als nächste auszulesenden Pixel P mittels der Zeilenauswahlschaltung 11 und der Spaltenauswahlschaltung 13 ausgewählt werden. Hierdurch wird frühzeitig, nämlich vor dem Anliegen der Signale der als nächste auszulesenden Pixel P an den Ausgangsverstärkern A₁, A₂, A₃, A₄, ein Einschwingen dieser Signale auf dem jeweils anderen Signalbus B₂ oder B₁ ermöglicht. Somit kann auch bei längeren Einschwingzeiten mit einer hohen Taktfrequenz ausgelesen werden.

Analog zu der Steuereinrichtung des Bildsensors gemäß Fig. 1 kann optional auch die Steuereinrichtung 17 des Bildsensors gemäß Fig. 2 dazu ausgebildet sein, die Spaltenauswahlschalter 19 durch die Spaltenauswahlschaltung 13 derart zu steuern, dass die Auslesereihenfolge der Spaltengruppen S₁, S₂, ... von Zeile zu Zeile variiert wird.

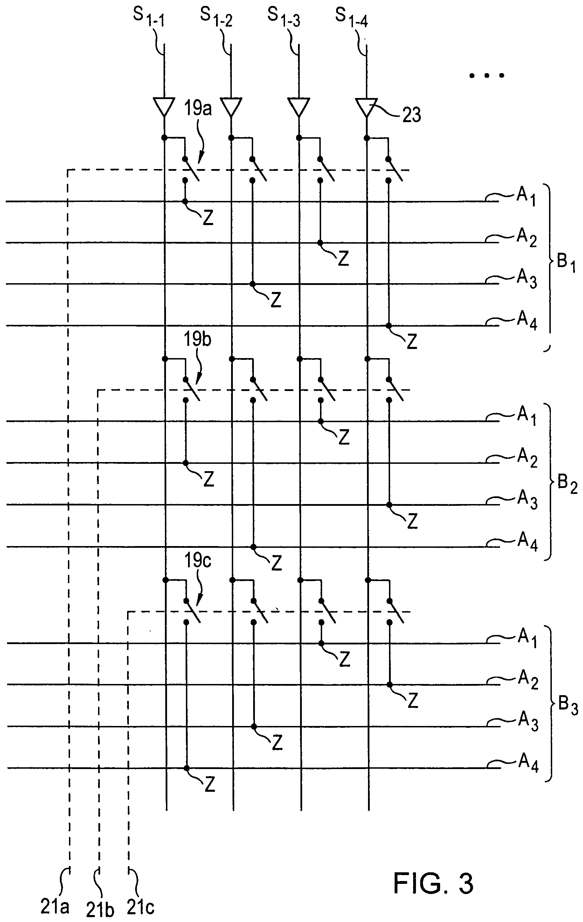

Der Bildsensor gemäß Fig. 3 weist drei Signalbusse B₁, B₂, B₃ auf und ist lediglich im Bereich der Zuordnung der Spaltengruppe S₁ zu den Signalbussen B₁, B₂, B₃ dargestellt, wobei die Spaltengruppe S₁ lediglich beispielhaft gewählt ist. Die Spaltengruppe S₁, ebenso wie die nicht dargestellten anderen Spaltengruppen S₂, S₃, ..., ist jedem der drei Signalbusse B₁, B₂, B₃ zugeordnet, wobei die Zuordnungsreihenfolgen innerhalb einer jeden Spaltengruppe S₁, S₂, ... verschieden sind.

Darüber hinaus sind den Zuordnungspunkten Z zugeordnete erste Spaltenauswahlschalter 19a für den 1. Signalbus B₁, zweite Spaltenauswahlschalter 19b für den 2. Signalbus B₂, und dritte Spaltenauswahlschalter 19c für den 3. Signalbus B₃ vorgesehen (von denen jeweils nur ein Spaltenauswahlschalter 19a, 19b, 19c mit einem Bezugszeichen versehen ist). Diese Spaltenauswahlschalter 19a, 19b, 19c erlauben es, die Spaltengruppen S₁, S₂, ... jeweils wahlweise auf einen einzigen der Signalbusse B₁, B₂, B₃ zu schalten, wobei die ersten Spaltenauswahlschalter 19a über eine gemeinsame Spaltenauswahlsteuerleitung 21a, die zweiten Spaltenauswahlschalter 19b über eine gemeinsame Spaltenauswahlsteuerleitung 21b, und die dritten Spaltenauswahlschalter 19c über eine gemeinsame Spaltenauswahlsteuerleitung 21c von der in Fig. 3 nicht gezeigten Spaltenauswahlschaltung steuerbar sind, so dass die Spaltenauswahlschalter 19a, 19b oder 19c jeweils gemeinsam schaltbar sind.

Um beispielsweise die 1. Spaltengruppe S₁ auf den 1. Signalbus B₁ zu schalten, werden die ersten Spaltenauswahlschalter 19a geschlossen, und die zweiten und dritten Spaltenauswahlschalter 19b, 19c geöffnet. Um die 1. Spaltengruppe S₁ auf den 2. Signalbus B₂ zu schalten, werden die zweiten Spaltenauswahlschalter 19b geschlossen, und die ersten und dritten Spaltenauswahlschalter 19a, 19c geöffnet. Um die 1. Spaltengruppe S₁ auf den 3. Signalbus B₃ zu schalten, werden die dritten Spaltenauswahlschalter 19c geschlossen, und die ersten und zweiten Spaltenauswahlschalter 19a, 19b geöffnet.

Folglich sind, im Gegensatz zu den Zuordnungen bei den in den Fig. 1 und 2 dargestellten Bildsensoren, die Spaltenleitungen S₁₋₁, ..., S₁₋₄, S₂₋₁, ..., S₂₋₄, ... den Ausgangsleitungen A₁, A₂, A₃, A₄ nicht fest zugeordnet. Vielmehr kann für jede Spaltengruppe S₁, S₂, ... eine Anzahl von verschiedenen Zuordnungsreihenfolgen vorgesehen sein, die der Anzahl der Signalbusse entspricht. Hierdurch ist eine weitere Verwürfelung möglich, da innerhalb einer einzigen Spaltengruppe mehrere unterschiedliche Zuordnungsreihenfolgen realisiert werden können, aus denen jeweils eine ausgewählt werden kann.

Im Übrigen entspricht der Aufbau des Bildsensors gemäß Fig. 3 dem Aufbau des Bildsensors gemäß Fig. 2, wobei jedoch analog zu den ersten beiden Signalbussen B₁, B₂ bei dem Bildsensor gemäß Fig. 3 auch für den dritten Signalbus B₃ Busauswahlschalter vorgesehen sind, welche über eine gemeinsame Busauswahlsteuerleitung von der in Fig. 3 nicht dargestellten Busauswahlschaltung steuerbar sind, so dass wahlweise einer der drei Signalbusse B₁, B₂, B₃ auf die in Fig. 3 nicht dargestellten Ausgangsverstärker schaltbar ist.

Der Bildsensor gemäß Fig. 3 ist für eine Auslesesequenz ausgelegt, die für ein vollständiges Auslesen lediglich zwei Signalbusse benötigt, beispielsweise die beiden Signalbusse B₁ und B₂. Bei dem 3. Signalbus B₃ handelt es sich um einen redundanten Signalbus, der als Ersatz für einen der beiden Signalbusse B₁, B₂ verwendet werden kann, falls einer der beiden Signalbusse B₁, B₂ defekt ist.

Vorzugsweise werden die Signalbusse beim Auslesen pro Zeile stets in derselben Sequenz, auf die Ausgangsverstärker geschaltet, d.h. die Sequenz wird innerhalb der Zeile zyklisch wiederholt, wobei die Sequenz von Zeile zu Zeile variiert wird. Hierdurch kann eine weitere Verwürfelung erreicht werden, und die verstärkten Signale können leicht den betreffenden Pixeln P zugeordnet werden, um die verstärkten Signale zu einem Aufnahmebild korrekt zusammensetzen zu können. Beispielsweise können bei einem Bildsensor mit vier Signalbussen B₁, B₂, B₃, B₄ (nicht gezeigt) und ggf. einem redundanten Signalbus B₅ (nicht gezeigt) die Signalbusse für das Auslesen der Spaltengruppen S₁, S₂, ... der ersten Zeile Z₁ in aufeinander folgenden Auslesezyklen in der Reihenfolge B₁, B₃, B₄, B₂, ... auf die Ausgangsverstärker V₁, V₂, V₃, V₄ geschaltet werden, für das Auslesen der Spaltengruppen S₁, S₂, ... der zweiten Zeile Z₂ in der Reihenfolge B₁, B₄, B₂, B₃, ..., usw.. Hierbei können vorbestimmte quasizufällige Reihenfolgen zur Anwendung gelangen.

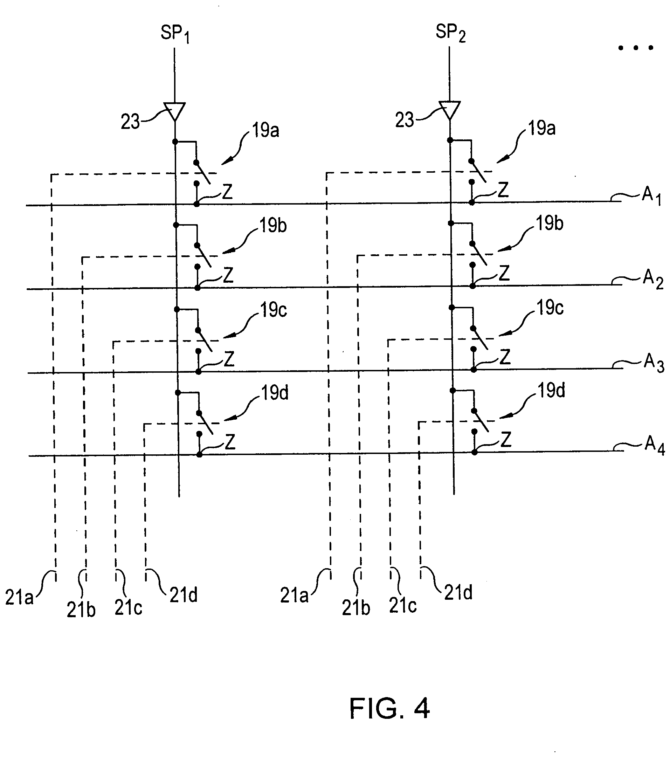

Der Bildsensor gemäß Fig. 4 ist, anders als die Bildsensoren gemäß den Fig. 1 bis 3, nicht in Spaltengruppen eingeteilt und umfasst neben einer Vielzahl von Spaltenleitungen SP₁, SP₂, ... einen einzigen Signalbus mit vier Ausgangsleitungen A₁, A₂, A₃, A₄. Der Bildsensor gemäß Fig. 4 ist lediglich im Bereich der Zuordnungen der ersten beiden Spaltenleitungen SP₁ und SP₂ zu den Ausgangsleitungen A₁, A₂, A₃, A₄ dargestellt, wobei die beiden Spaltenleitungen SP₁ und SP₂ lediglich beispielhaft gewählt sind. Die Spaltenleitungen SP₁ und SP₂, ebenso wie die nicht dargestellten anderen Spaltenleitungen SP₃, SP₄, ..., sind jeder der vier Ausgangsleitungen A₁, A₂, A₃, A₄ zugeordnet.

Hierfür sind den Spaltenleitungen SP₁, SP₂, ... jeweils zugeordnete erste Spaltenauswahlschalter 19a für die 1. Ausgangsleitung A₁, zweite Spaltenauswahlschalter 19b für die 2. Ausgangsleitung A₂, dritte Spaltenauswahlschalter 19c für die 3. Ausgangsleitung A₃, und vierte Spaltenauswahlschalter 19d für die 4. Ausgangsleitung A₄ vorgesehen. Diese Spaltenauswahlschalter 19a, 19b, 19c, 19d erlauben es der in Fig. 4 nicht dargestellten Spaltenauswahlschaltung, die Spaltenleitungen SP₁, SP₂, ... über jeweilige Spaltenauswahlsteuerleitungen 21a, 21b, 21c, 21d jeweils wahlweise auf eine einzige der Ausgangsleitungen A₁, A₂, A₃, A₄ zu schalten.

Um beispielsweise die 1. Spaltenleitung SP₁ auf die 1. Ausgangsleitung A₁ zu schalten, wird der erste Spaltenauswahlschalter 19a geschlossen, und der zweite, der dritte und der vierte Spaltenauswahlschalter 19b, 19c, 19d werden geöffnet. Um die 1. Spaltenleitung SP₁ auf die 2. Ausgangsleitung A₂ zu schalten, wird der zweite Spaltenauswahlschalter 19b geschlossen, und der erste, der dritte und der vierte Spaltenauswahlschalter 19a, 19c, 19d werden geöffnet. Um die 1. Spaltenleitung SP₁ auf die 3. Ausgangsleitung A₃ zu schalten, wird der dritte Spaltenauswahlschalter 19c geschlossen, und der erste, der zweite und der vierte Spaltenauswahlschalter 19a, 19b, 19d werden geöffnet. Um die 1. Spaltenleitung SP₁ auf die 4. Ausgangsleitung A₄ zu schalten, wird der vierte Spaltenauswahlschalter 19d geschlossen, und der erste, der zweite und der dritte Spaltenauswahlschalter 19a, 19b, 19c werden geöffnet.

Analog zu den Zuordnungen bei dem in Fig. 3 dargestellten Bildsensor, sind bei dem Bildsensor gemäß Fig. 4 die Spaltenleitungen SP₁, SP₂, ... den Ausgangsleitungen A₁, A₂, A₃, A₄ nicht fest zugeordnet. Vielmehr kann jede Spaltenleitung SP₁, SP₂, ... jeder der Ausgangsleitungen A₁, A₂, A₃, A₄ zugeordnet werden. Hierdurch kann auf einfache Weise eine Verwürfelung erreicht werden, beispielsweise indem die Spalten entlang einer jeweiligen Zeile in einer quasi-zufälligen Reihenfolge auf die Verstärker geschaltet werden. Alternativ oder zusätzlich kann die Auslesereihenfolge, in der die Spaltenleitungen SP₁, SP₂, ... nacheinander auf die Ausgangsverstärker geschaltet werden, gegenüber der Anordnungsreihenfolge der Spalten entlang der Zeile variiert werden.

Außerdem kann aufgrund der in Fig. 4 gezeigten Anordnung ein defekter Ausgang umgangen werden, indem die entsprechende Ausgangsleitung Aᵢ nicht mehr benutzt wird.

Im Übrigen entspricht der Aufbau des Bildsensors gemäß Fig. 4 dem Aufbau des Bildsensors gemäß Fig. 1, wobei jedoch die Spaltenleitungen SP₁, SP₂, ... entgegen Fig. 1 nicht in Spaltengruppen eingeteilt sind. Grundsätzlich ist es auch möglich, den Bildsensor gemäß Fig. 4 derart abzuwandeln, dass mehrere Signalbusse vorgesehen sind (nicht gezeigt), wobei jede Spaltenleitung jedem der Signalbusse über entsprechende Spaltenauswahlschalter wie vorstehend zu Fig. 3 erläutert zugeordnet ist. Alternativ ist es bei mehreren Signalbussen jedoch auch möglich, dass jede Spaltenleitung jedem der Signalbusse zugeordnet ist, wobei die jeweilige Spaltenleitung aber nicht allen der Ausgangsleitungen des jeweiligen Signalbusses zugeordnet ist.

In den Fig. 1 bis 4 liegen die Signale der Pixel P der jeweiligen Zeile der jeweiligen Spaltengruppe S₁, S₂, ... in Form von Spannungssignalen an den Ausgangsverstärkern V₁, V₂, V₃, V₄ an, um anschließend mittels einer A/D-Wandlereinrichtung (nicht gezeigt) jeweils in einen digitalen Wert gewandelt zu werden.

Bei den Pixeln P des Bildsensors handelt es sich bevorzugt um aktive Pixel, bei denen die Ladungssignale bereits in den Pixeln P in Spannungssignale umgewandelt werden. Grundsätzlich können die Pixel P aber auch als passive Pixel ausgebildet sein, bei denen die Konvertierung der Ladungssignale in Spannungssignale auf dem Signalweg von den Pixeln P zu den Ausgangsverstärkern A₁, A₂, A₃, A₄ stattfindet. Bei den Spaltenauswahlschaltern 19 und den Busauswahlschaltern 25 kann es sich beispielsweise um CMOS-Transistoren handeln.

Die Verwendung von vier Ausgangsleitungen, vier Spaltenleitungen pro Spaltengruppe, vier Ausgangsverstärkern oder von zwei, drei, vier oder fünf Signalbussen ist lediglich beispielhafter Natur. Grundsätzlich kann jede beliebige andere Anzahl an Ausgangsleitungen, Spaltenleitungen pro Spaltengruppe, Ausgangsverstärkern oder Signalbussen vorgesehen sein.

### Bezugszeichenliste

- 11: Zeilenauswahlschaltung
- 13: Spaltenauswahlschaltung
- 15: Busauswahlschaltung
- 17: Mikro-Controller
- 19: Spaltenauswahlschalter
- 21: Spaltenauswahlsteuerleitung
- 23: Spaltenverstärker
- 25: Busauswahlschalter
- 27: Busauswahlsteuerleitung

- A₁, A₂, A₃, A₄: Ausgangsleitung
- B₁, B₂, B₃: Signalbus
- P: Pixel
- S₁, S₂, ...: Spaltengruppen
- S₁₋₁, ..., S₁₋₄, S₂₋₁, ..., S₂₋₄, ...: Spaltenleitung
- SP₁, SP₂, ...: Spaltenleitung
- V₁, V₂, V₃, V₄: Ausgangsverstärker
- Z: Zuordnungspunkt
- Z₁, Z₂, ...: Zeilenauswahlleitung

## Patentansprüche

1. Bildsensor, insbesondere CMOS-Bildsensor, für elektronische Kameras, mit
einer Vielzahl von in Zeilen (..., Zₘ₋₁, Zₘ) und Spalten (S₁₋₁, ..., S₁₋₄, S₂₋₁, ..., S₂₋₄, ... bzw. SP₁, SP₂, ...) angeordneten lichtempfindlichen Pixeln (P),
einer Anzahl von Ausgangsverstärkern (V₁, V₂, V₃, V₄), wobei die Spalten (S₁₋₁, ..., S₁₋₄, S₂₋₁, ..., S₂₋₄, ...) in mehrere aufeinander folgende Spaltengruppen (S₁, S₂, ...) mit jeweils gleicher Anzahl an Spalten (S₁₋₁, ..., S₁₋₄, S₂₋₁, ..., S₂₋₄, ...) unterteilt sind und die Anzahl der Ausgangsverstärker (V₁, V₂, V₃, V₄) der Anzahl der Spalten (S₁₋₁, ..., S₁₋₄, S₂₋₁, ..., S₂₋₄, ...) einer Spaltengruppe (S₁, S₂,...) entspricht,
einer Schalteinrichtung (11, 13, 15), um wahlweise die Pixel (P) einer der Zeilen (..., Zₘ₋₁, Zₘ) spaltengruppenweise auf die Ausgangsverstärker (V₁, V₂, ..., V₄) zu schalten, wobei die Pixel (P) der jeweiligen gewählten Spaltengruppe (S₁, S₂,...) einer jeweiligen Zeile (..., Zₘ₋₁, Zₘ) parallel zueinander auf die Ausgangsverstärker (V₁, V₂, V₃, V₄) geschaltet werden, und
einer Steuereinrichtung (17) zum Steuern der Schalteinrichtung (11, 13, 15),
wobei der Bildsensor derart ausgebildet ist, dass die Reihenfolge, in der die Pixel (P) auf die Ausgangsverstärker (V₁, V₂, V₃, V₄) geschaltet werden, von der Reihenfolge, in der diese Pixel (P) entlang einer Zeile (..., Zₘ₋₁, Zₘ) des Bildsensors angeordnet sind, verschieden ist, und wobei die Spalten (S₁₋₁, ..., S₁₋₄, S₂₋₁, ..., S₂₋₄, ...) einer jeden Spaltengruppe (S₁, S₂, ...) gemäß einer Zuordnungsreihenfolge den Ausgangsverstärkern (V₁, V₂, V₃, V₄) zugeordnet sind, wobei für wenigstens einige der Spaltengruppen (S₁, S₂,...) voneinander verschiedene Zuordnungsreihenfolgen vorgesehen sind.

2. Bildsensor nach Anspruch 1,
**dadurch gekennzeichnet,**
**dass** alle Spaltengruppen (S₁, S₂,...) voneinander verschiedene Zuordnungsreihenfolgen aufweisen; oder
**dass** für benachbarte Spaltengruppen (S₁, S₂,...) verschiedene Zuordnungsreihenfolgen vorgesehen sind.

3. Bildsensor nach zumindest einem der vorstehenden Ansprüche,
**dadurch gekennzeichnet,**
**dass** der Bildsensor mehrere Signalbusse (B₁, B₂, B₃) aufweist, welche jeweils eine Anzahl von Ausgangsleitungen (A₁, A₂, A₃, A₄) umfassen, die der Anzahl der Ausgangsverstärker (V₁, V₂, V₃, V₄) entspricht, wobei die Schalteinrichtung (15) dazu ausgebildet ist, die Ausgangsleitungen (A₁, A₂, A₃, A₄) jeweils eines der mehreren Signalbusse (B₁, B₂, B₃) wahlweise auf die Ausgangsverstärker (V₁, V₂, V₃, V₄) zu schalten.

4. Bildsensor nach Anspruch 3,
**dadurch gekennzeichnet,**
**dass** die Steuereinrichtung (17) dazu ausgebildet ist, die Schalteinrichtung (15) dergestalt zu steuern, dass zwei nacheinander auf die Ausgangsverstärker (V₁, V₂, V₃, V₄) geschaltete Spaltengruppen (S₁, S₂, ...) über verschiedene der Signalbusse (B₁, B2, B₃) auf die Ausgangsverstärker (V₁, V₂, V₃, V₄) geschaltet werden.

5. Bildsensor nach Anspruch 3 oder 4,
**dadurch gekennzeichnet,**
**dass** wenigstens einige der Spaltengruppen (S₁, S₂,...) mehreren der Signalbusse (B₁, B₂, B₃) zugeordnet sind, wobei die Zuordnungsreihenfolgen innerhalb einer jeden solchen Spaltengruppe (S₁, S₂,...) für die mehreren Signalbusse (B₁, B₂, B₃) verschieden sind.

6. Bildsensor nach zumindest einem der Ansprüche 3 bis 5,
**dadurch gekennzeichnet,**
**dass** die Steuereinrichtung (17) dazu ausgebildet ist, die Schalteinrichtung (15) dergestalt zu steuern, dass die Signalbusse (B₁, B₂, B₃) von Zeile (..., Zₘ₋₁, Zₘ) zu Zeile (..., Zₘ₋₁, Zₘ) in unterschiedlicher Reihenfolge auf die Ausgangsverstärker (V₁, V₂, V₃, V₄) geschaltet werden.

7. Bildsensor nach zumindest einem der Ansprüche 3 bis 6,
**dadurch gekennzeichnet,**
**dass** die Steuereinrichtung (17) dazu ausgebildet ist, die Schalteinrichtung (11, 13) dergestalt zu steuern, dass innerhalb einer jeweiligen Spaltengruppe (S₁, S₂,...) die Spalten (S₁₋₁, ..., S₁₋₄, S₂₋₁, ..., S₂₋₄, ...) von Zeile (..., Zₘ₋₁, Zₘ) zu Zeile (..., Zₘ₋₁, Zₘ) auf unterschiedliche Signalbusse (B₁, B₂, B₃) geschaltet werden.

8. Bildsensor nach zumindest einem der Ansprüche 3 bis 7,
**dadurch gekennzeichnet,**
**dass** die Steuereinrichtung (17) dazu ausgebildet ist, den Bildsensor unter Verwendung einer vorbestimmten Anzahl von Signalbussen (B₁, B₂) vollständig auszulesen, wobei der Bildsensor mehr Signalbusse (B₁, B₂, B₃) aufweist als die vorbestimmte Anzahl.

9. Bildsensor nach zumindest einem der vorstehenden Ansprüche,
**dadurch gekennzeichnet,**
**dass** die Spaltengruppen (S₁, S₂, ...) gemäß einer Anordnungsreihenfolge relativ zueinander angeordnet sind und die Steuereinrichtung (17) dazu ausgebildet ist, die Schalteinrichtung (11, 13, 15) dergestalt zu steuern, dass die Spaltengruppen (S₁, S₂, ...) für jede Zeile gemäß einer jeweiligen Auslesereihenfolge nacheinander auf die Ausgangsverstärker (V₁, V₂, V₃, V₄) geschaltet werden, wobei die Auslesereihenfolge der Spaltengruppen (S₁, S₂,...) von der Anordnungsreihenfolge der Spaltengruppen (S₁, S₂,...) verschieden ist.

10. Bildsensor nach zumindest einem der vorstehenden Ansprüche,
**dadurch gekennzeichnet,**
**dass** der Bildsensor wenigstens einen Signalbus (B1, B2, B3) aufweist, welcher eine Anzahl von Ausgangsleitungen (A1, A2, A3, A4) umfasst, die der Anzahl der Ausgangsverstärker (V1, V2, V3, V4) entspricht, wobei die Spalten (SP₁, SP₂, ...) an vorbestimmten Zuordnungspunkten (Z) mit jeweils einer der Ausgangsleitungen (A1, A2, A3, A4) des wenigstens einen Signalbusses (B1, B2, B3) verbunden sind.

## Claims

1. An image sensor, in particular a CMOS image sensor, for electronic cameras, comprising
a plurality of light sensitive pixels (P) arranged in rows (..., Zₘ₋₁, Zₘ) and columns (S₁₋₁, ..., S₁₋₄, S₂₋₁, ..., S₂₋₄, ... or SP₁, SP₂, ...);
a number of output amplifiers (V₁, V₂, V₃, V₄), wherein the columns (S₁₋₁, ..., S₁₋₄, S₂₋₁, ..., S₂₋₄, ...) are divided into a plurality of consecutive column groups (S₁, S₂, ...) each having the same number of columns (S₁₋₁, ..., S₁₋₄, S₂₋₁, ..., S₂₋₄, ...), and the number of output amplifiers (V₁, V₂, V₃, V₄) corresponds to the number of columns (S₁₋₁, ..., S₁₋₄, S₂₋₁, ..., S₂₋₄, ...) of a column group (S₁, S₂,...);
a switching device (11, 13, 15) to selectively switch the pixels (P) of one of the rows (..., Zₘ₋₁, Zₘ) to the output amplifiers (V₁, V₂, ..., V₄) column-group-wise, wherein the pixels (P) of the respective selected column group (S₁, S₂,...) of a respective row (..., Zₘ₋₁, Zₘ) are switched in parallel with one another to the output amplifiers (V₁, V₂, V₃, V₄); and
a control device (17) for controlling the switching device (11, 13, 15),
wherein the image sensor is configured such that the order in which the pixels (P) are switched to the output amplifiers (V₁, V₂, V₃, V₄) differs from the order in which these pixels (P) are arranged along a row (..., Zₘ₋₁, Zₘ) of the image sensor, and wherein the columns (S₁₋₁, ..., S₁₋₄, S₂₋₁, ..., S₂₋₄, ...) of each column group (S₁, S₂, ...) are associated with the output amplifiers (V₁, V₂, V₃, V₄) in accordance with an association order, with mutually different association orders being provided for at least some of the column groups (S₁, S₂,...).

2. An image sensor in accordance with claim 1,
**characterized in that**
all of the column groups (S₁, S₂,...) have mutually different association orders; or
**in that** different association orders are provided for adjacent column groups (S₁, S₂,...).

3. An image sensor in accordance with at least one of the preceding claims,
**characterized in that**
the image sensor has a plurality of signal buses (B₁, B₂, B₃) which each comprise a number of output lines (A₁, A₂, A₃, A₄) which corresponds to the number of output amplifiers (V₁, V₂, V₃, V₄), with the switching device (15) being configured to switch the output lines (A₁, A₂, A₃, A₄) of a respective one of the plurality of signal buses (B₁, B₂, B₃) selectively to the output amplifiers (V₁, V₂, V₃, V₄).

4. An image sensor in accordance with claim 3,
**characterized in that**
the control device (17) is configured to control the switching device (15) such that two column groups (S₁, S₂,...) switched sequentially to the output amplifiers (V₁, V₂, V₃, V₄) are switched to the output amplifiers (V₁, V₂, V₃, V₄) via different ones of the signal buses (B₁, B₂, B₃).

5. An image sensor in accordance with claim 3 or claim 4,
**characterized in that**
at least some of the column groups (S₁, S₂, ...) are associated with a plurality of signal buses (B₁, B₂, B₃), with the association orders within each such column group (S₁, S₂,...) being different for the plurality of signal buses (B₁, B₂, B₃).

6. An image sensor in accordance with at least one of the claims 3 to 5,
**characterized in that**
the control device (17) is configured to control the switching device (15) such that the signal buses (B₁, B₂, B₃) are switched to the output amplifiers (V₁, V₂, V₃, V₄) from row (..., Zₘ₋₁, Zₘ) to row (..., Zₘ₋₁, Zₘ) in different orders.

7. An image sensor in accordance with at least one of the claims 3 to 6,
**characterized in that**
the control device (17) is configured to control the switching device (11, 13) such that, within a respective column group (S₁, S₂, ...), the columns (S₁₋₁, ..., S₁₋₄, S₂₋₁, ..., S₂₋₄, ...) are switched to different signal buses (B₁, B₂, B₃) from row (..., Zₘ₋₁, Zₘ) to row (..., Zₘ₋₁, Zₘ).

8. An image sensor in accordance with at least one of the claims 3 to 7,
**characterized in that**
the control device (17) is configured to completely read out the image sensor using a predetermined number of signal buses (B₁, B₂), with the image sensor having more signal buses (B₁, B₂, B₃) than the predetermined number.

9. An image sensor in accordance with at least one of the preceding claims,
**characterized in that**
the column groups (S₁, S₂,...) are arranged relative to one another in accordance with an arrangement order and the control device (17) is configured to control the switching device (11, 13, 15) such that the column groups (S₁, S₂,...) are switched sequentially for each row in accordance with a respective readout order to the output amplifiers (V₁, V₂, V₃, V₄), with the readout order of the column groups (S₁, S₂, ...) being different from the arrangement order of the column groups (S₁, S₂,...).

10. An image sensor in accordance with at least one of the preceding claims,
**characterized in that**
the image sensor has at least one signal bus (B1, B2, B3) which comprises a number of output lines (A1, A2, A3, A4) which corresponds to the number of output amplifiers (V1, V2, V3, V4), with the columns (SP₁, SP₂, ...) being connected to a respective one of the output lines (A1, A2, A3, A4) of the at least one signal bus (B1, B2, B3) at predetermined association points (Z).

## Revendications

1. Capteur d'images, en particulier capteur d'images CMOS, pour des caméras électroniques, comportant
une multitude de pixels photosensibles (P) disposés en lignes (..., Zₘ₋₁, Zₘ) et en colonnes (S₁₋₁, ..., S₁₋₄, S₂₋₁, ..., S₂₋₄, ... ou SP₁, SP₂, ...),
un certain nombre d'amplificateurs de sortie (V1, V₂, V₃, V₄), les colonnes (S₁₋₁, ..., S₁₋₄, S₂₋₁, ..., S₂₋₄, ...) étant subdivisées en plusieurs groupes de colonnes successifs (S₁, S₂,...) ayant chacun le même nombre de colonnes (S₁₋₁, ..., S₁₋₄, S₂₋₁, ..., S₂₋₄, ...) et le nombre d'amplificateurs de sortie (V1, V₂, V₃, V₄) correspondant au nombre de colonnes (S₁₋₁, ..., S₁₋₄, S₂₋₁, ..., S₂₋₄, ...) d'un groupe de colonnes (S₁, S₂,...),
un moyen de commutation (11, 13, 15) pour commuter au choix les pixels (P) de l'une des lignes (..., Zₘ₋₁, Zₘ) par groupe de colonnes sur les amplificateurs de sortie (V1, V₂,..., V₄), les pixels (P) du groupe de colonnes respectif choisi (S₁, S₂,...) d'une ligne respective (..., Zₘ₋₁, Zₘ) étant commutés en parallèle les uns aux autres sur les amplificateurs de sortie (V₁, V₂, V₃, V₄), et
un moyen de commande (17) pour commander le moyen de commutation (11, 13, 15),
le capteur d'images étant réalisé de telle sorte que l'ordre chronologique dans lequel les pixels (P) sont commutés sur les amplificateurs de sortie (V₁, V₂, V₃, V₄) est différent de l'ordre chronologique dans lequel ces pixels (P) sont disposés le long d'une ligne (..., Zₘ₋₁, Zₘ) du capteur d'images, et les colonnes (S₁₋₁, ..., S₁₋₄, S₂₋₁, ..., S₂₋₄, ...) de chaque groupe de colonnes (S₁, S₂,...) sont associées aux amplificateurs de sortie (V₁, V₂, V₃, V₄) selon un ordre chronologique d'association, et il est prévu des ordres chronologiques d'association différents pour quelques-uns au moins des groupes de colonne (S₁, S₂,...).

2. Capteur d'images selon la revendication 1,
**caractérisé en ce que**
tous les groupes de colonnes (S₁, S₂,...) présentent des ordres chronologies d'association différents les uns des autres ; ou
pour des groupes de colonnes (S₁, S₂,...) voisins, il est prévu des ordres chronologiques d'association différents.

3. Capteur d'images selon l'une au moins des revendications précédentes,
**caractérisé en ce que**
le capteur d'images présente plusieurs bus de signal (B₁, B₂, B₃) qui comprennent chacun un certain nombre de fils de sortie (A₁, A₂, A₃, A₄) qui correspond au nombre d'amplificateurs de sortie (V₁, V₂, V₃, V₄), le moyen de commutation (15) étant réalisé pour commuter au choix les fils de sortie (A₁, A₂, A₃, A₄) de l'un parmi les plusieurs bus de signal (B₁, B₂, B₃) sur les amplificateurs de sortie (V1, V₂, V₃, V₄).

4. Capteur d'images selon la revendication 3,
**caractérisé en ce que**
le moyen de commande (17) est réalisé pour commander le moyen de commutation (15) de telle sorte que deux groupes de colonnes (S₁, S₂,...) commutés successivement sur les amplificateurs de sortie (V₁, V₂, V₃, V₄) sont commutés sur les amplificateurs de sortie (V₁, V₂, V₃, V₄) via différents bus de signal (B₁, B₂, B₃).

5. Capteur d'images selon la revendication 3 ou 4,
**caractérisé en ce que**
quelques-uns au moins des groupes de colonnes (S₁, S₂,...) sont associés à plusieurs des bus de signal (B₁, B₂, B₃), les ordres chronologiques d'association au sein de chaque groupe de colonnes (S₁, S₂,...) pour les plusieurs bus de signal (B₁, B₂, B₃) étant différents.

6. Capteur d'images selon l'une au moins des revendications 3 à 5,
**caractérisé en ce que**
le moyen de commande (17) est réalisé pour commander le moyen de commutation (15) de telle sorte que d'une ligne (..., Zₘ₋₁, Zₘ) à l'autre (..., Zₘ₋₁, Zₘ), les bus de signal (B₁, B₂, B₃) sont commutés sur les amplificateurs de sortie dans un ordre chronologique différent.

7. Capteur d'images selon l'une au moins des revendications 3 à 6,
**caractérisé en ce que**
le moyen de commande (17) est réalisé pour commander le moyen de commutation (11, 13) de telle sorte qu'au sein d'un groupe de colonnes respectif (S₁, S₂,...), d'une ligne (..., Zₘ₋₁, Zₘ) à l'autre (..., Zₘ₋₁, Zₘ), les colonnes (S₁₋₁, ..., S₁₋₄, S₂₋₁, ..., S₂₋₄, ...) sont commutées sur différents bus de signal (B₁, B₂, B₃).

8. Capteur d'images selon l'une au moins des revendications 3 à 7,
**caractérisé en ce que**
le moyen de commande (17) est réalisé pour lire complètement le capteur d'images en utilisant un nombre prédéterminé de bus de signal (B₁, B₂), le capteur d'images comprenant un nombre de bus de signal (B₁, B₂, B₃) supérieur au nombre prédéterminé.

9. Capteur d'images selon l'une au moins des revendications précédentes,
**caractérisé en ce que**
les groupes de colonnes (S₁, S₂,...) sont disposés selon un ordre de disposition les uns par rapport aux autres et le moyen de commande (17) est réalisé pour commander le moyen de commutation (11, 13, 15) de telle sorte que les groupes de colonnes (S₁, S₂,...) pour chaque ligne sont commutés successivement sur les amplificateurs de sortie (V₁, V₂, V₃, V₄) selon un ordre chronologique de lecture respectif, l'ordre chronologique de lecture des groupes de colonnes (S₁, S₂,...) étant différent de l'ordre de disposition des groupes de colonnes (S₁, S₂,...).

10. Capteur d'images selon l'une au moins des revendications précédentes,
**caractérisé en ce que**
le capteur d'images comprend au moins un bus de signal (B1, B2, B3) qui comprend un certain nombre de fils de sortie (A1, A2, A3, A4) qui correspond au nombre d'amplificateurs de sortie (V1, V2, V3, V4), les colonnes (SP₁, SP₂, ...) étant reliées à l'un au moins des fils de sortie (A1, A2, A3, A4) dudit au moins un bus de signal (B1, B2, B3), à des points d'association prédéterminés (Z).
